# EUROPÄISCHE PATENTANMELDUNG

(11) **EP 2 863 135 A1**
(43) Veröffentlichungstag der Anmeldung: **22.04.2015**
(21) Anmeldenummer: 14186944.6
(22) Anmeldetag: 30.09.2014
(51) Int. Cl.: F24D 19/10

(54) **Optimierung der Sollwerttemperatur für einen Bereitschaftsteil in Heizungsanlagen, insbesondere zur Erwärmung von Trinkwasser**

(30) Priorität: 15.10.2013 DE 102013220806
(71) Anmelder: ROBERT BOSCH GMBH, 70442 Stuttgart (DE)
(72) Erfinder: Senn, Matthias, 73249 Wernau (DE)

(57) **Zusammenfassung**

Die Erfindung betrifft ein Verfahren zum Betreiben einer Heizungsanlage mit einem Wärmeerzeuger, mit einem Wärme speichernden Bereitschaftsteil und einer Frischwasserstation. Es wird vorgeschlagen, dass die Frischwasserstation und der Wärmeerzeuger miteinander kommunizieren.

## Beschreibung

Die Erfindung betrifft ein Verfahren zum Betreiben einer Heizungsanlage mit einem Wärmeerzeuger, einem Wärme speichernden Bereitschaftsteil und einer Frischwasserstation nach dem Oberbegriff des Hauptanspruchs, sowie eine solchermaßen betriebene Heizungsanlage und eine Steuerung.

### Stand der Technik

Derartige Heizungsanlagen finden überall dort Anwendung, wo ein erwärmtes Wärme übertragendes Medium, oft Heizwasser, und/oder Trinkwasser benötigt wird. So wird beispielsweise Heizwasser zum Heizen von Räumen verwendet und erwärmtes Trinkwasser zum Zapfen in Küche oder Sanitärbereich.

Für moderne Heizungsanlagen besteht heute ein zunehmender Bedarf nach Energieeffizienz und Komfort. Im Bereich der Trinkwassererwärmung offenbart die EP2226571A1 eine Anordnung zum Erwärmen von Trinkwasser, umfassend eine Frischwasserstation, eine primäre Wärmequelle, sowie einen in Strömungsrichtung des bereits erwärmten Trinkwassers hinter der Frischwasserstation angeordneten Durchlauferhitzer mit einer Steuer- und Regeleinheit zum Steuern und/oder Regeln der Temperatur des Trinkwassers. Dabei besteht zwischen dem Durchlauferhitzer und der Frischwasserstation eine Steuer- und/oder Regelsignalverbindung zur Sollwerteinstellung der Temperatur des Trinkwassers in der Frischwasserstation durch den Durchlauferhitzer. In der EP2226571A1 ist als primäre Wärmequelle eine mit erneuerbaren Energien oder mit fossilen Brennstoffen betriebene Heizeinheit vorgesehen, welche zwei oder mehr Wärmeerzeuger umfasst, was sehr kostenintensiv ist.

### Offenbarung der Erfindung

Das erfindungsgemäße Verfahren zum Betreiben einer Heizungsanlage mit einem Wärmeerzeuger, einem Wärme speichernden Bereitschaftsteil und einer Frischwasserstation behebt den Mangel des Stands der Technik dadurch, dass die Frischwasserstation und der Wärmeerzeuger miteinander kommunizieren.

Hierbei ist ein Wärmeerzeuger definiert als eine Heizeinheit zum Erwärmen eines Wärme übertragenden Mediums, wie beispielsweise Wasser. Ein Bereitschaftsteil ist definiert als ein Teil der Heizungsanlage, das vom Wärme übertragenden Medium durchflossen wird und insbesondere Wärme speichern kann. Bisweilen wird das Bereitschaftsteil in der Literatur auch Wärmepuffer oder Pufferspeicher genannt. Unter einer Frischwasserstation ist ein Modul zu verstehen, mit welchem Trinkwasser, beispielsweise im Gegenstromprinzip oder Durchlaufprinzip, durch das Wärme übertragende Medium erwärmt wird. Nach dem heutigen Stand der Technik ist die Frischwasserstation oft mit einem Wärmetauscher, welcher die Wärmeübertragung vom Wärme übertragenden Medium auf das Trinkwasser ermöglicht, einer Regel- und/oder Steuereinheit, einer Pumpe, und gegebenenfalls je nach Ausstattung und Komfort einem Ventil und/oder einem Mischer ausgestattet, wobei diese Komponenten zu einer Einheit verbaut sein können. Es werden auch die einzelnen Komponenten in ihrer Gesamtheit, ohne dass sie eine bauliche Einheit bilden, als Frischwasserstation bezeichnet.

Durch die in den Unteransprüchen aufgeführten Merkmale sind vorteilhafte Weiterbildungen des erfindungsgemäßen Verfahrens für das Betreiben einer Heizungsanlage nach dem Hauptanspruch möglich.

Die Heizungsanlage kann mindestens eine Sekundärpumpe und/oder ein Ventil und/oder einen Mischer aufweisen, wobei die Frischwasserstation und der Wärmeerzeuger mit der Sekundärpumpe und/oder dem Ventil und/oder dem Mischer miteinander verbunden sein und kommunizieren können. Dies hat den Vorteil, dass die Sekundärpumpe und/oder das Ventil und/oder der Mischer geregelt und/oder gesteuert werden können, was zu einem optimalen Funktionieren der Heizungsanlage führt. Umfasst die Frischwasserstation eine Pumpe, so handelt es sich bei dieser Pumpe um die Sekundärpumpe, wobei dann Pumpe und Sekundärpumpe synonym zu verstehen sind. Die Verbindung zwischen der Sekundärpumpe und/oder dem Ventil und/oder dem Mischer mit dem Wärmeerzeuger kann direkt bestehen oder indirekt über das Bereitschaftsteil.

Besonders vorteilhaft zum Gewährleisten eines optimalen Ablaufs ist es, wenn eine Leistung und/oder ein Betriebsverhalten, insbesondere ein Sollwert, der Sekundärpumpe und/oder des Ventils und/oder des Mischers ermittelt werden können.

Die Frischwasserstation kann über den Breitschaftsteil mit dem Wärmeerzeuger verbunden sein, wobei die Sekundärpumpe und/oder das Ventil und/oder der Mischer in einem zweiten Teilheizkreis zwischen Frischwasserstation und Bereitschaftsteil angeordnet sein können. Der erste Heizkreis umfasst dann den Heizkreis zwischen dem Wärmeerzeuger und dem Bereitschaftsteil. Dies hat den Vorteil, dass alle relevanten Komponenten der Heizungsanlage zur Trinkwarmwasseraufbereitung miteinander verbunden sein und miteinander kommunizieren können, was ein optimiertes Betreiben der Heizungsanlage ermöglicht.

Für das erfindungsgemäße Verfahren ist es vorteilhaft, wenn ein Sollwert, insbesondere eine Sollwerttemperatur, für das Bereitschaftsteil und/oder ein Sollwert, insbesondere eine Sollwerttemperatur, für den Wärmeerzeuger gesetzt werden können, sofern kein Sollwert festgelegt ist. Dabei kann ein festgelegter Sollwert auch neu gesetzt werden. Dies bietet Flexibilität insbesondere mit Hinblick auf die individuellen Wünsche eines Anwenders.

Der Vorteil des Verfahrens liegt darin, dass durch die Frischwasserstation der Sollwert für den Wärmeerzeuger und/oder der Sollwert für das Bereitschaftsteil beeinflusst werden können, was einen optimierten Betrieb, insbesondere mit Hinblick auf Energieeffizienz, der Heizungsanlage gewährleistet.

Werden der Sollwert für das Bereitschaftsteil und/oder der Sollwert für den Wärmeerzeuger erniedrigt, wenn eine Zapfmenge eine Sollwerttemperatur erreicht und eine Ist-Leistung und/oder ein Sollwert der Sekundärpumpe und/oder des Ventils und/oder des Mischers unterhalb einer vorgebbaren Schwelle liegen und/oder ihren Maximalwert nicht erreichen, hat dies den Vorteil, dass der Sollwert für das Bereitschaftsteil dem Trinkwarmwasserzapfverhalten des Anwenders angepasst werden kann. Dadurch wird nur das Temperaturniveau gespeichert und/oder vorgehalten, das tatsächlich nötig ist, um ein gewünschtes Trinkwarmwasserzapfvolumen zu liefern, was zu höherer Energieeffizienz führt.

Ebenso ist es vorteilhaft, wenn der Sollwert für das Bereitschaftsteil und/oder der Sollwert für den Wärmeerzeuger erhöht werden können, sofern eine Zapfmenge eine Sollwerttemperatur nicht erreicht und die Ist-Leistung und/oder der Sollwert der Sekundärpumpe und/oder des Ventils und/oder des Mischers eine vorgebbare Schwelle überschreiten und/oder auf ihrem Maximalwert arbeiten. Neben einer Erhöhung der Energieeffizienz wird auch der Komfort für den Anwender gesteigert, da die Sollwerttemperatur für das Trinkwasser stets erreicht werden kann.

Es ist von Vorteil, wenn ein temporärer Sollwert, insbesondere eine temporäre Sollwerttemperatur, für das Breitschaftsteil und/oder ein temporärer Sollwert, insbesondere eine temporäre Sollwerttemperatur, für den Wärmeerzeuger gespeichert werden können. Damit ist der temporäre Sollwert stets verfügbar und kann mit dem Sollwert verglichen werden, um sicherzustellen, dass die Sollwerttemperatur des Trinkwassers erreicht wird.

Wird der Sollwert für das Bereitschaftsteil und/oder für den Wärmeerzeuger variabel ausgelegt, dessen Höhe vom Betriebsverhalten der Heizungsanlage abhängt, hat dies den Vorteil, dass die Heizungsanlage flexibel auf eine Trinkwarmwasseranforderung reagieren kann. Eine unnötige Erwärmung des Mediums im Bereitschaftsteil entfällt, oder aber das Medium im Breitschaftsteil kann weiter erwärmt werden, um die Sollwerttemperatur des Trinkwassers zu erreichen. Neben erhöhtem Komfort führt dies gleichzeitig dazu, dass nur die Energie auf einem optimalen Temperaturniveau gespeichert wird, die auch tatsächlich benötigt wird.

Um eine erhöhte Energieeffizienz und einen gesteigerten Komfort zu ermöglichen, ist es vorteilhaft, wenn der temporäre Sollwert auf den variablen Sollwert abgesenkt werden kann, falls eine Zapfmenge eine Sollwerttemperatur erreicht und die Ist-Leistung und/oder der Sollwert der Sekundärpumpe und/oder des Ventils und/oder des Mischers eine vorgebbare Schwelle unterschreiten und/oder ihren Maximalwert nicht erreichen.

Ebenso kann der temporäre Sollwert auf den variablen Sollwert erhöht werden, falls eine Zapfmenge eine Sollwerttemperatur nicht erreicht und die Ist-Leistung und/oder der Sollwert der Sekundärpumpe und/oder des Ventils und/oder des Mischers eine vorgebbare Schwelle überschreiten und/oder auf ihrem Maximalwert arbeiten.

Dabei ist es aus Komfortgründen, aber auch aus Gründen der Energieeffizienz, von Vorteil, wenn der temporäre Sollwert schrittweise an den variablen Sollwert angepasst wird. Der Sollwerttemperatur des Trinkwassers wird sich in optimaler Weise genähert. So werden große Sprünge in der Sollwerttemperatur des Trinkwassers vermieden, was vom Anwender als unangenehm empfunden werden kann. Ferner wird sichergestellt, dass nur das Temperaturniveau bereitgestellt wird, das nötig ist, um die Sollwerttemperatur des Trinkwassers zu erreichen.

Zu Beginn einer Trinkwarmwasseranforderung kann der Sollwert für das Bereitschaftsteil als temporärer Sollwert gesetzt werden. Dieser kann dann im Verlaufe der Trinkwarmwasserzapfung an den variablen Sollwert angepasst werden.

Daneben kann zu Beginn der Trinkwarmwasseranforderung als temporärer Sollwert auch der von der vorherigen Trinkwarmwasseranforderung gespeicherte temporäre Sollwert eingesetzt werden. Beide Vorgehensweisen haben den Vorteil, dass dem Anwender mehr Flexibilität geboten wird. Das persönliche Betriebsverhalten kann gespeichert und dementsprechend die Heizungsanlage betrieben werden. Oder es wird ein Standardbetrieb gewählt. Der Anwender kann sich für die Betriebsweise entscheiden, die seinem persönlichen Bedarf entspricht, was einen erhöhten Komfort nach sich zieht. Auch eine erhöhte Energieeffizienz ist dadurch möglich, da sich die Heizungsanlage den Gewohnheiten anpassen kann. Beispielsweise kann so unnötiges Erwärmen des Mediums im Bereitschaftsteil entfallen.

Es ist vorteilhaft, wenn eine Erhöhung des temporären Sollwerts auf den variablen Sollwert schneller erfolgt als eine Absenkung. Dies hat den Vorteil, dass ein schnelles Erreichen der Sollwerttemperatur des Trinkwassers erreicht wird, was zum einen angenehmer für den Anwender ist, zum anderen aber auch Energie und Wasser spart.

Damit die Sollwerttemperatur des Trinkwassers erreicht werden kann, ist es vorteilhaft, wenn der Wärmeerzeuger das Bereitschaftsteil aufheizen kann, sofern der Istwert des Bereitschaftsteils den Sollwert unterschreitet.

Um den Betrieb der Heizungsanlage weiter zu optimieren, ist es von Vorteil, wenn die Anpassung des Sollwerts für das Bereitschaftsteil und/oder den Wärmeerzeuger über mehrere Zapfungen hinweg vorgenommen und/oder aufgezeichnet werden kann, da das Medium im Bereitschaftsteil eine gewisse thermische Trägheit aufweist.

Damit die Heizungsanlage gemäß eines vergangenen Zapfverhaltens geregelt und/oder gesteuert werden kann, kann es vorteilhaft sein, wenn die Anpassung des Sollwerts für das Bereitschaftsteil und/oder den Wärmeerzeuger aufgrund vergangener, über mehrere Zapfungen hinweg aufgezeichneter angepasster Sollwerte vorgenommen werden kann.

Die Erfindung betrifft auch eine Heizungsanlage mit einem Wärmeerzeuger, einem Wärme speichernden Bereitschaftsteil und einer Frischwasserstation, die insbesondere nach dem oben offenbarten Verfahren betrieben wird. Dabei ist es ihr Vorteil, dass die Frischwasserstation und der Wärmeerzeuger elektrisch miteinander verbunden sein und miteinander kommunizieren können.

Ferner ist es vorteilhaft, wenn die Verbindung zwischen der Frischwasserstation und dem Wärmeerzeuger eine kabellose Verbindung ist. Dies ermöglicht unter anderem eine Kommunikation per Funk, was Flexibilität schafft, beispielsweise beim Aufbau und der Installation der Heizungsanlage.

Zudem ist es von Vorteil, wenn die Frischwasserstation und/oder der Wärmeerzeuger per Funk ansteuerbar sind. Dies bietet dem Anwender hohen Komfort und hohe Flexibilität. So lassen sich die Frischwasserstation und/oder Wärmeerzeuger beispielsweise mit einem Mobiltelefon oder einem Computer unter Verwendung des Internets ansteuern.

Die Erfindung betrifft weiter eine Steuerung in einer Heizungsanlage mit einem Wärmeerzeuger, einem Wärme speichernden Bereitschaftsteil und einer Frischwasserstation, die sich dadurch auszeichnet, dass das oben offenbarte Verfahren zum Betreiben der Heizungsanlage abläuft.

### Zeichnung

In den Figuren sind erfindungsgemäße Heizungsanlagen dargestellt und ist ein erfindungsgemäßes Verfahren in der nachfolgenden Beschreibung mit beschrieben. Es zeigen
Figur 1 eine Heizungsanlage nach einem ersten Ausführungsbeispiel,
Figur 2 eine Heizungsanlage nach einem zweiten Ausführungsbeispiel,
Figur 3 eine Heizungsanlage nach einem dritten Ausführungsbeispiel,
Figur 4 eine Heizungsanlage nach einem vierten Ausführungsbeispiel,
Figur 5 ein erfindungsgemäßes Verfahren nach einem Ausführungsbeispiel..

### Beschreibung der Zeichnungen

In den Figuren sind unterschiedliche Heizungsanlagen dargestellt, wobei gleichen Baukomponenten gleiche Bezugszahlen zugeordnet sind.

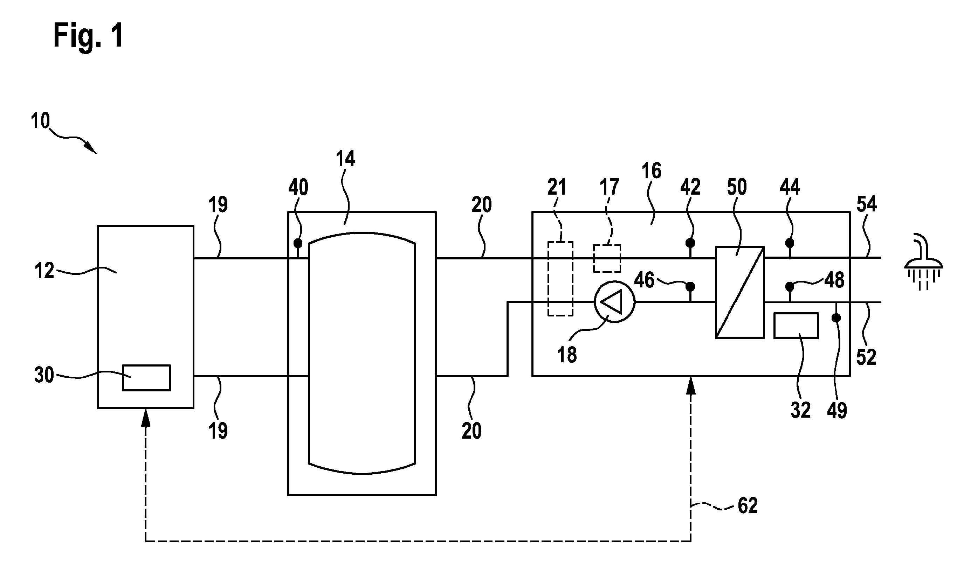

In Figur 1 ist eine Heizungsanlage 10 mit einem Wärmeerzeuger 12, einem Wärme speichernden Bereitschaftsteil 14 und einer Frischwasserstation 16 gezeigt. Der Wärmeerzeuger 12 kann mit fossilen oder erneuerbaren Energien betrieben werden. Mögliche Beispiele eines Wärmeerzeugers 12 sind ein gas- oder ölbetriebener Kessel, eine solarthermische Anlage, ein Pelletofen oder -kessel oder eine Wärmepumpe. Der Wärmeerzeuger 12 erwärmt ein Wärme übertragendes Medium, beispielsweise Wasser oder Luft, welches im Bereitschaftsteil 14 gespeichert wird. Handelt es sich bei dem Wärme übertragenden Medium um Wasser, spricht man oft von Heizwasser.

Im Ausführungsbeispiel umfasst die Frischwasserstation 16 einen Wärmetauscher 50, eine erste Regel- und/oder Steuereinheit 32 und eine Sekundärpumpe 18. Weiter können ein Ventil 17, beispielsweise ein Rückschlagventil oder ein Durchflussventil, und/oder ein Mischer 21 vorgesehen sein. Diese sind in Figur 1 als gestrichelte Boxen dargestellt. Desweiteren sind mehrere Sensoren, beispielsweise Temperatursensoren 42, 44, 46, 48, vorgesehen. Diese einzelnen Komponenten sind im Ausführungsbeispiel als eine Einheit verbaut, welche sich außerhalb des Bereitschaftsteils 14 befindet. Im Kaltwasserzulauf 52 ist ein Durchflussensor 49 angebracht.

Zum einwandfreien Betrieb der Heizungsanlage und/oder Trinkwarmwasseraufbereitung können noch weitere Komponenten vonnöten sein, die hier nicht dargestellt werden.

Das Bereitschaftsteil 14 und der Wärmeerzeuger 12 befinden sich in einem ersten Teilheizkreis 19, in welchem das Wärme übertragende Medium zirkuliert, und sind so hydraulisch miteinander verbunden (in den Zeichnungen als durchgezogene Linien dargestellt). Die Frischwasserstation 16 und das Bereitschaftsteil 14 sind über die Sekundärpumpe 18 in einem zweiten Teilheizkreis 20 miteinander verbunden.

Die Sekundärpumpe 18 und/oder das Ventil 17 und/oder der Mischer 21 können auch im ersten Teilheizkreis 19 angeordnet sein (nicht dargestellt).

Im Vorlauf des Breitschaftsteils 14 ist mindestens ein Sensor, insbesondere ein Temperatursensor 40, angebracht.

Im ersten Ausführungsbeispiel wird innerhalb der Frischwasserstation 16 kaltes Trinkwasser von dem im Bereitschaftsteil 14 gespeicherten Medium beispielsweise im Gegenstrom- oder Durchstromprinzip erwärmt. Hierbei zirkuliert das Medium in dem zweiten Teilheizkreis 19 vom Bereitschaftsteil 14 durch die Frischwasserstation 16, vorbei am Wärmetauscher 50. Das Trinkwasser fließt durch den Wärmetauscher 50 hindurch. Dabei kommen das Wärme übertragende Medium und das Trinkwasser nicht in Berührung.

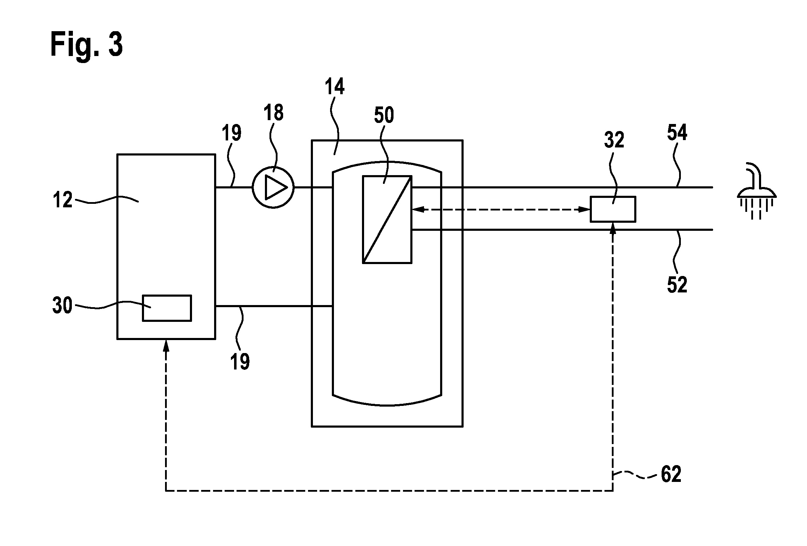

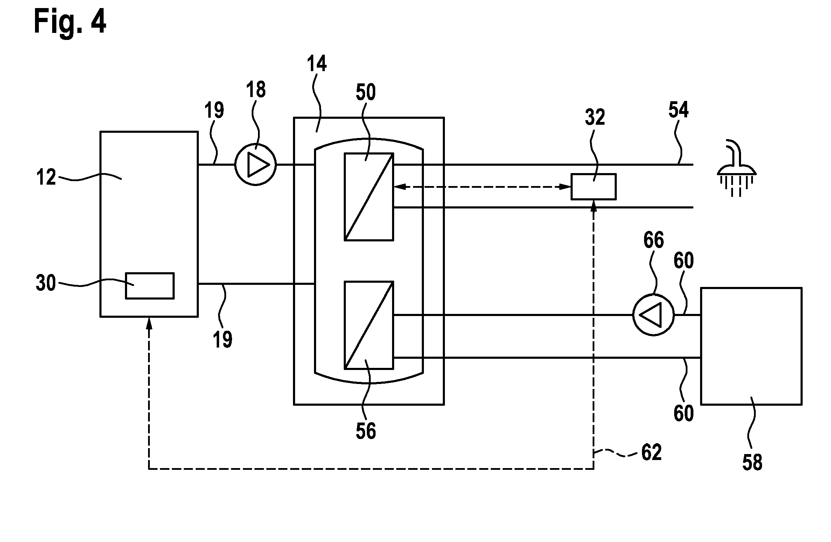

Eine mögliche Ausführungsform des Bereitschaftsteils 14 ist ein Pufferspeicher oder ein Schichtenspeicher. Auch Kombispeicher sind denkbar. Hier befindet sich die Frischwasserstation 16 innerhalb des Bereitschaftsteils 14. Dies wird weiter unten näher ausgeführt (Figur 3 und Figur 4).

In dem Bereitschaftsteil 14 kann sich auch ein Trinkwasserspeicher befinden (nicht dargestellt). Das Medium im Bereitschaftsteil 14 erwärmt dann das im Trinkwasserspeicher befindliche Trinkwasser.

Selbstverständlich können sich auch mehr als ein Wärmeerzeuger 12, ein Bereitschaftsteil 14 und eine Frischwasserstation 16 in der Heizungsanlage 10 befinden. Denkbar ist beispielsweise das Vorsehen mehrerer Bereitschaftsteile 14 in paralleler oder Reihenschaltung oder, im Falle dessen, dass der Wärmeerzeuger 58 mit erneuerbaren Energien betrieben wird, eines weiteren Wärmeerzeugers 12 zur Vermeidung möglicher Engpässe.

Im ersten Ausführungsbeispiel besteht eine elektrische Verbindung zwischen dem Wärmeerzeuger 12 und der Frischwasserstation 16, beispielsweise in Form einer Signal- und/oder Datenverbindung 62, so dass der Wärmeerzeuger 12 und die Frischwasserstation 16 miteinander kommunizieren können. Eine elektrische Verbindung ist in allen Figuren als gestrichelte Linie dargestellt.

Bei der Verbindung zwischen dem Wärmeerzeuger 12 und der Frischwasserstation 16 kann es sich auch um eine kabellose Verbindung handeln, so dass Daten und/oder Signale beispielsweise über Funk übermittelt werden.

Weiter kann in einem nicht dargestellten Ausführungsbeispiel vorgesehen sein, dass der Wärmeerzeuger 12 und die Frischwasserstation 16 per Funk ansteuerbar sind, beispielsweise mit einem Mobiltelefon, einem Computer oder einer funkfähigen Bedieneinheit, welche sich zum Beispiel außerhalb der Heizungsanlage 10 befindet.

Im Ausführungsbeispiel in Figur 1 sind der Wärmeerzeuger 12 mit einer ersten Regel- und/oder Steuereinheit 30 und die Frischwasserstation 16 mit einer zweiten Regel- und/oder Steuereinheit 32 versehen, mit der Signale und/oder Daten über die Signal- und/oder Datenverbindung 62 ausgetauscht werden können. Beispielsweise können ermittelte Daten aller Sensoren in der Heizungsanlage, insbesondere der Temperatursensoren 40, 42, 44, 46, 48, an die Frischwasserstation 16 und/oder den Wärmeerzeuger 12 übermittelt werden.

Die Frischwasserstation 16, der Wärmeerzeuger 12 und die Sekundärpumpe 18 sind miteinander elektrisch verbunden und kommunizieren miteinander. Hierdurch lässt sich die Sekundärpumpe 18 regeln und/oder steuern. Zudem wird die Leistung der Sekundärpumpe 18 ermittelt. Die Leistung der Sekundärpumpe 18 ist neben der Temperatur des Mediums im Bereitschaftsteil 14 und der Temperatur des Kalttrinkwassers verantwortlich für das Erreichen einer gewünschten Sollwerttemperatur für das Trinkwarmwasser, da mit ihr der Volumenstrom im zweiten Teilheizkreis 20 geregelt und/oder gesteuert werden kann.

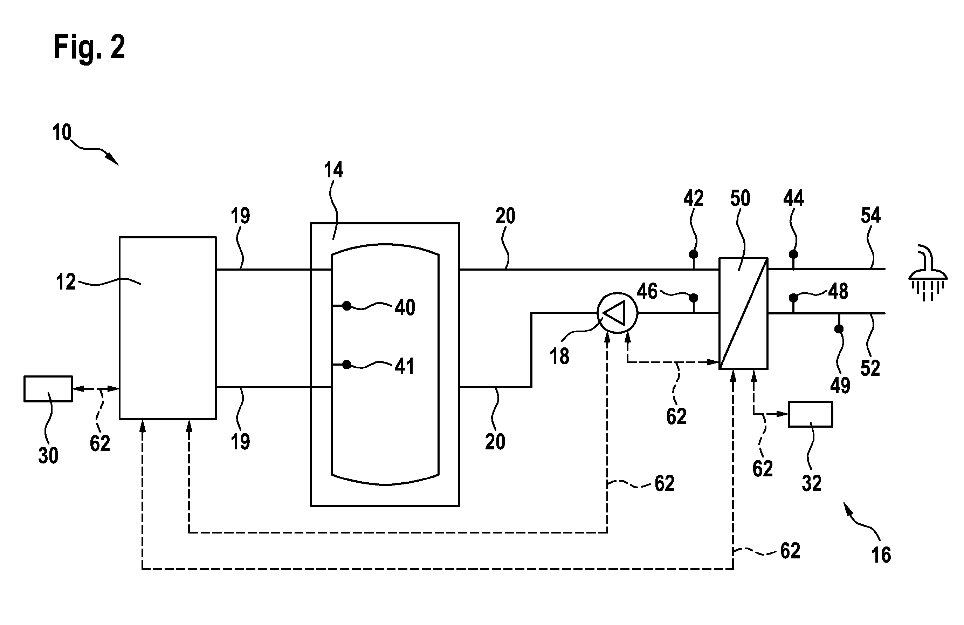

Im zweiten Ausführungsbeispiel in Figur 2 besteht die Frischwasserstation 16 aus der Sekundärpumpe 18, der Regel- und/oder Steuereinheit 32 und den Temperatursensoren 42, 44, 46, 48, wobei die einzelnen Komponenten im Gegensatz zum ersten Ausführungsbeispiel keine bauliche Einheit bilden, sondern als Einzelteile vorliegen. Die Sekundärpumpe 18 ist als eine eigene Einheit im zweiten Teilheizkreis 20 dargestellt. In diesem Fall wird die Gesamtheit dieser Einzelteile als Frischwasserstation 16 bezeichnet.

Im zweiten Ausführungsbeispiel befindet sich die Regel- und/oder Steuereinheit 30 außerhalb des Wärmeerzeugers 12, wobei die Regel- und/oder Steuereinheit 30 und der Wärmeerzeuger 12 über eine Daten- und/oder Signalleitung 62 miteinander verbunden sind.

Wie im ersten Ausführungsbeispiel ist die Frischwasserstation 16 außerhalb des Bereitschaftsteils 14 angeordnet, wobei kaltes Trinkwasser, welches durch den Wärmeerzeuger 50 strömt, von dem im Bereitschaftsteil 14 gespeicherten Medium im Gegenstromprinzip erwärmt wird.

Im zweiten Ausführungsbeispiel weist das Bereitschaftsteil 14 zwei Sensoren auf, insbesondere Temperatursensoren 40, 41, die innerhalb des Bereitschaftsteils 14 in unterschiedlichen Höhen angebracht sind.

Zur Trinkwarmwasserbereitung genügt neben Heiz- und Trinkwasser prinzipiell ein Wärmetauscher 50 als Hauptkomponente, so dass auch dann von einer Frischwasserstation 16 gesprochen wird, wenn ein Wärmetauscher 50 zur Trinkwarmwasseraufbereitung in der Heizungsanlage 10 vorgesehen ist. So befindet sich im dritten Ausführungsbeispiel in Figur 3 der Wärmetauscher 50 im Bereitschaftsteil 14. In diesem Fall wird die Bezeichnung verwendet, dass sich die Frischwasserstation 16 im Bereitschaftsteil 14 befindet.

In diesem dritten Ausführungsbeispiel fallen erster und zweiter Teilheizkreis 19, 20 zusammen zu einem Heizkreis 64, in welchem sich die Sekundärpumpe 18, das Ventil 17 und/oder der Mischer befindet.

Die Trinkwassererwärmung erfolgt im Durchlaufprinzip, wobei das warme Medium im Bereitschaftsteil 14 über den Wärmetauscher 50 Wärme an das Trinkwasser abgibt. Eine mögliche Ausführungsform des Bereitschaftsteils 14 in diesem Ausführungsbeispiel ist ein Kombispeicher.

Auch im vierten Ausführungsbeispiel befindet sich die Frischwasserstation 16 im Bereitschaftsteil 14, wobei deren Regel- und/oder Steuereinheit sich außerhalb des Bereitschaftsteils 14 befindet und elektrisch mit der Frischwasserstation 16 verbunden ist und mit dieser kommuniziert. Neben dem Wärmetauscher 50 der Frischwasserstation 16 ist ein weiterer Wärmetauscher 56, beispielsweise ein Solarwärmetauscher, im Bereitschaftsteil 14 vorgesehen.

Weiter umfasst die Heizungsanlage 10 einen weiteren Wärmeerzeuger 58, welcher beispielsweise eine solarthermische Anlage oder eine Wärmepumpe sein kann, welcher über einen zweiten Teilheizkreis 60 mit dem Bereitschaftsteil 14 hydraulisch verbunden ist. Es ist eine Pumpe 66 im zweiten Teilheizkreis 60 vorgesehen. Die Sekundärpumpe 18 befindet sich hier im ersten Teilheizkreis 19 zwischen Wärmeerzeuger 12 und Bereitschaftsteil 14 bzw. Frischwasserstation 16. Wärmeerzeuger 12, Frischwasserstation 16, Wärmeerzeuger 58, Sekundärpumpe 18 und Pumpe 66 sind elektrisch miteinander verbunden, so dass sie miteinander kommunizieren können (der Übersicht wegen nicht dargestellt). Auch hier kann es sich um eine kabellose Verbindung handeln.

Ein Fluid im zweiten Teilheizkreis 20 wird vom Wärmeerzeuger 58 erwärmt und zirkuliert durch den Wärmetauscher 56 im Bereitschaftsteil 14, wodurch im Durchlaufprinzip das Medium im Bereitschaftsteil 14 erwärmt wird. Das Medium im Bereitschaftsteil kann auch zusätzlich vom Wärmeerzeuger 12 erwärmt werden, sofern eine Sollwerttemperatur für das Bereitschaftsteil 14 allein durch den Wärmeerzeuger 58 nicht erreicht wird. Über den Wärmetauscher 50 erwärmt dann das Medium im Bereitschaftsteil 14 das Trinkwasser.

In allen Ausführungsbeispielen wird für den Bereitschaftsteil 14 ein Sollwert 22, insbesondere eine Sollwerttemperatur, vorgegeben (nicht dargestellt), sofern dieser nicht schon festgelegt ist. Dabei wird eine benötigte Übertemperatur für den Wärmetransport vom Wärme übertragenden Medium, beispielsweise Heizwasser, auf das Trinkwasser aufgrund von Wärmeverlusten berücksichtigt. Üblicherweise wird er als fixer Wert dem Wärmeerzeuger 12 und/oder der Frischwasserstation 16 eingegeben. Ebenso kann ein bereits festgelegter Sollwert über eine Eingabe geändert werden.

Zum Betreiben der Heizungsanlage 10 läuft ein Verfahren, welches im Folgenden näher erläutert wird. Dabei läuft das Verfahren unabhängig von den verschiedenen Ausführungsformen und/oder Ausführungsbeispielen oder lässt sich leicht anpassen.

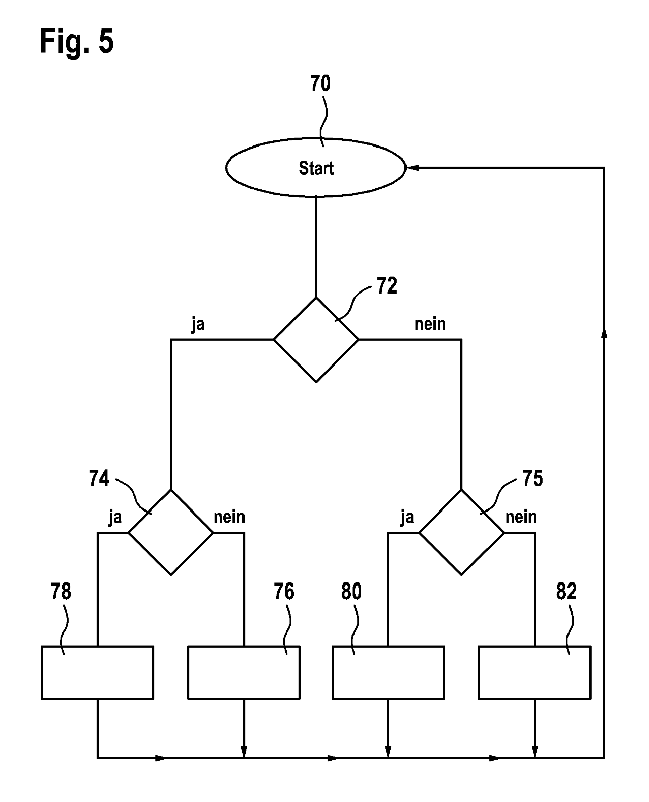

Figur 5 stellt in einem Ausführungsbeispiel den prinzipiellen Ablauf des Verfahrens zum Betreiben der Heizungsanlage 10 dar.

In Schritt 70 wird zu Beginn einer Trinkwasserzapfung ein angeforderter Zapfvolumenstrom mit einer gewünschten Sollwerttemperatur registriert und gespeichert. Desweiteren wird eine Leistungsschwelle für die Sekundärpumpe 18 vorgegeben. Als Leistungsschwelle kann auch die Maximalleistung der Sekundärpumpe 18 gewählt werden.

In Schritt 72 wird überprüft, ob die Leistungsschwelle der Sekundärpumpe 18 erreicht wurde.

Ist die Leistungsschwelle erreicht, so wird im Schritt 74 abgefragt, ob die Sollwerttemperatur für die angeforderte Trinkwasserzapfmenge erreicht ist. Ist die Trinkwassertemperatur niedriger als die Sollwerttemperatur, so werden der Sollwert 22 für das Bereitschaftsteil 14 und/oder der Sollwert 23 für den Wärmeerzeuger erhöht. Wurde das Trinkwasser auf Sollwerttemperatur gebracht, so wird die Leistung der Sekundärpumpe 18 erniedrigt. Anschließend beginnt das Verfahren von neuem bei Schritt 70.

Wurde die Leistungsschwelle der Sekundärpumpe 18 nicht erreicht, so wird im Schritt 75 abgefragt, ob die Sollwerttemperatur für die angeforderte Trinkwasserzapfmenge erreicht ist. Ist dem so, so wird in Schritt 80 der Sollwert 22, 23 erniedrigt. Wurde die Sollwerttemperatur nicht erreicht, so wird die Leistung der Sekundärpumpe 18 erhöht. Anschließend startet das Verfahren wieder bei Schritt 70.

Um den Betrieb der Heizungsanlage 10 weiter zu optimieren, speichert das Verfahren mehrere Sollwerte, insbesondere Sollwerttemperaturen. Dies wird mit Hilfe der Figur 5 näher erläutert.

Im Verlaufe des Verfahrens werden ein variabler Sollwert 26, insbesondere eine variable Sollwerttemperatur (nicht dargestellt), für den Bereitschaftsteil 14 und/oder ein variabler Sollwert 27 für den Wärmeerzeuger ermittelt und gespeichert. Die Höhe des ermittelten variablen Sollwerts 26, 27 ist abhängig vom Betriebsverhalten der Heizungsanlage 10 und wird dementsprechend angepasst.

Zur Ermittlung des variablen Sollwerts 26, 27 wird in einem Ausführungsbeispiel die Ist-Leistung der Sekundärpumpe 18 und die Ist-Temperatur des angeforderten Trinkwassers herangezogen. Hierfür wird wie in Schritt 70 die Ist-Temperatur des Trinkwassers gemessen und gespeichert. Weiter wird die Ist-Leistung der Sekundärpumpe 18 über die Signal- und/oder Datenverbindung 62 erfasst. Ebenso wird die Leistungsschwelle für die Sekundärpumpe 18 vorgegeben. Wie oben kann als Leistungsschwelle die Maximalleistung der Sekundärpumpe 18 gewählt werden.

Ferner werden ein temporärer Sollwert 24, insbesondere eine temporäre Sollwerttemperatur (nicht dargestellt), für das Bereitschaftsteil 14 und/oder ein temprärer Sollwert 25 für den Wärmeerzeuger gespeichert. Dieser wird zu Beginn einer Trinkwarmwasseranforderung initial gesetzt. Hierfür sind mehrere Möglichkeiten denkbar. Beispielsweise kann als temporärer Sollwert 24, 25 der vorgegebene Sollwert 22 für das Bereitschaftsteil 14 gewählt werden. Oder es wird der von der vorherigen Trinkwarmwasseranforderung zuletzt gespeicherte temporäre Sollwert 24, 25 verwendet.

Zur Ermittlung des variablen Sollwerts 26, 27 wird die Ist-Temperatur mit der Sollwerttemperatur des Trinkwassers verglichen. Ferner wird die Ist-Leistung mit der vorgegeben Leistungsschwelle der Sekundärpumpe 18 verglichen.

Wie in Schritt 72 wird überprüft, ob die Sekundärpumpe 18 die Leistungsschwelle erreicht. Tut sie dies, so wird wie in Schritt 74 abgefragt, ob die Ist-Temperatur des Trinkwassers die Sollwerttemperatur des Trinkwassers erreicht. Ist dem so, so wird keine weitere Anpassung des Sollwerts 22, 23 vorgenommen, jedoch wird wie im Schritt 78 die Leistung der Sekundärpumpe 18 erniedrigt.
Ergibt die Abfrage wie in Schritt 74, dass die Ist-Temperatur des Trinkwassers die Sollwerttemperatur des Trinkwassers nicht erreicht, so ist die Temperatur des Mediums im Bereitschaftsteil 14 zu niedrig, um das Trinkwasser auf die gewünschte Sollwerttemperatur zu bringen, wobei die Leistung der Sekundärpumpe 18 nicht weiter gesteigert werden kann, da sie bereits ihre Leistungsschwelle erreicht hat. In diesem Fall wird der variable Sollwert 26, 27 gesetzt als der temporäre Sollwert 24, 25 zuzüglich einer Toleranz, insbesondere einer Toleranztemperatur, so dass der variable Sollwert 26, 27 größer als der temporäre Sollwert 24 ist. Das heißt, da der temporäre Sollwert 24, 25 für das Bereitschaftsteil zu Beginn der Trinkwarmwasserzapfung mit dem Sollwert 22, 23 übereinstimmt, der Sollwert 22, 23 wird wie in Schritt 76 erhöht. Anschließend beginnt das Verfahren bei Schritt 70.

Ergibt die Abfrage wie in Schritt 72, dass die Sekundärpumpe 18 nicht ihre Leistungsschwelle erreicht hat, so wird wiederum wie in Schritt 75 überprüft, ob die Ist-Temperatur die Sollwerttemperatur des Trinkwassers erreicht.

Erreicht die Ist-Temperatur die Sollwerttemperatur des Trinkwassers, so ist die Temperatur des Mediums im Bereitschaftsteil 14 unnötigerweise zu hoch, da die gewünschte Sollwerttemperatur erreicht wird, obwohl die Sekundärpumpe 18 nicht ihre Leistungsschwelle erreicht. In diesem Fall wird der variable Sollwert 26, 27 gesetzt als der temporäre Sollwert 24, 25 abzüglich einer Toleranz, so dass der variable Sollwert 26, 27 größer als der temporäre Sollwert 24, 25 ist. Das heißt, der Sollwert 22, 23 wird wie in Schritt 76 erniedrigt. Anschließend beginnt das Verfahren wieder bei Schritt 70.

Ergibt die Abfrage wie in Schritt 75, dass die Ist-Temperatur die Sollwerttemperatur des Trinkwassers nicht erreicht, wobei gemäß Schritt 72 die Leistung der Sekundärpumpe 18 nicht ihre Leistungsschwelle erreicht hat, so wird keine weitere Anpassung des Sollwerts 22, 23 vorgenommen, jedoch wird wie im Schritt 82 die Leistung der Sekundärpumpe 18 erhöht. Anschließend beginnt das Verfahren erneut bei Schritt 70. Die Toleranz wird derart gewählt, dass der temporäre Sollwert 24, 25 schrittweise an den variablen Sollwert 26, 27 angepasst wird, wobei eine Erhöhung des temporären Sollwerts 24, 25 auf den variablen Sollwert 26, 27 schneller erfolgt als eine Absenkung.

Zwischen Absenkung und Erhöhung des Sollwerts 22, 23 kann eine Hysterese vorgesehen sein, um einen ständig wechselnden Sollwert 22, 23 zu vermeiden.

Sofern der Istwert des Bereitschaftsteils 14 den Sollwert 22, 23 unterschreitet, veranlasst das Verfahren, dass der Wärmeerzeuger 12 das Medium im Bereitschaftsteil 14 aufheizt.

Das Verfahren wiederholt diese Schritte so lange, bis die Sollwerttemperatur des Trinkwassers für die angeforderte Zapfmenge erreicht ist.

Das oben genannte Verfahren kann auch über mehrere Trinkwasserzapfungen hinweg ablaufen, wobei die Anpassung des Sollwerts 22, 23 über mehrere Zapfungen hinweg vorgenommen und/oder aufgezeichnet wird. Die Anpassung des Sollwerts 22, 23 kann auch aufgrund vergangener, über mehrere Zapfungen hinweg aufgezeichneter angepasster Sollwerte 22, 23 vorgenommen werden, so dass die Heizungsanlage 10 das Zapfverhalten "lernt".

Das oben beschriebene Verfahren läuft in den oben ausgeführten Ausführungsbeispielen in der Regel- und/oder Steuereinheit 30 des Wärmeerzeugers 12 und in der Regel- und/oder Steuereinheit 32 der Frischwasserstation 16. Selbstverständlich kann das Verfahren für jede Steuerung konzipiert sein, die die technischen Voraussetzungen zum Betreiben eines Verfahrens erfüllt.

## Patentansprüche

1. Verfahren zum Betreiben einer Heizungsanlage (10) mit einem Wärmeerzeuger (12), einem Wärme speichernden Bereitschaftsteil (14) und einer Frischwasserstation (16), **dadurch gekennzeichnet, dass** die Frischwasserstation (16) und der Wärmeerzeuger (12) miteinander kommunizieren.

2. Verfahren nach Anspruch 1, **dadurch gekennzeichnet, dass** die Heizungsanlage (10) mindestens eine Sekundärpumpe (18) und/oder ein Ventil (17) und/oder einen Mischer (21) aufweist, wobei die Frischwasserstation (16) und der Wärmeerzeuger (12) mit der Sekundärpumpe (18) und/oder dem Ventil (17) und/oder dem Mischer (21) verbunden sind und mit diesen kommunizieren, so dass die Sekundärpumpe (18) und/oder das Ventil (17) und/oder der Mischer (21) geregelt und/oder gesteuert werden können.

3. Verfahren nach einem der Ansprüche 1 oder 2, **dadurch gekennzeichnet, dass** eine Leistung und/oder ein Betriebsverhalten, insbesondere ein Sollwert, der Sekundärpumpe (18), des Ventils (18) und/oder des Mischers (21) ermittelt werden.

4. Verfahren nach einem der Ansprüche 1 bis 3, **dadurch gekennzeichnet, dass** die Frischwasserstation (16) über die Sekundärpumpe (18) und/oder das Ventil (17) und/oder den Mischer (21) mit dem Bereitschaftsteil (14) und über einen ersten Teilheizkreis (19) mit dem Wärmeerzeuger (12) verbunden ist, wobei die Sekundärpumpe (18) und/oder das Ventil (17) und/oder der Mischer (21) in einem zweiten Teilheizkreis (20) zwischen Frischwasserstation (16) und Bereitschaftsteil (14) angeordnet sind.

5. Verfahren nach einem der Ansprüche 1 bis 4, **dadurch gekennzeichnet, dass** ein Sollwert (22), insbesondere eine Sollwerttemperatur, für das Bereitschaftsteil (14) und/oder ein Sollwert (23), insbesondere eine Sollwerttemperatur, für den Wärmeerzeuger (12) gesetzt werden, sofern kein Sollwert festgelegt ist.

6. Verfahren nach Anspruch 5, **dadurch gekennzeichnet, dass** durch die Frischwasserstation (16) der Sollwert (23) für den Wärmeerzeuger (12) und/oder der Sollwert (22) für das Bereitschaftsteil (14) beeinflusst werden.

7. Verfahren nach Anspruch 5 oder 6, **dadurch gekennzeichnet, dass** der Sollwert (22) für das Bereitschaftsteil (14) und/oder der Sollwert (23) für den Wärmeerzeuger (12) erniedrigt werden, wenn eine Zapfmenge eine Sollwerttemperatur erreicht und eine Ist-Leistung und/oder ein Sollwert der Sekundärpumpe (18) und/oder des Ventils (18) und/oder des Mischers (21) unterhalb einer vorgebbaren Schwelle liegen und/oder ihren Maximalwert nicht erreichen.

8. Verfahren nach einem der Ansprüche 5 bis 7, **dadurch gekennzeichnet, dass** der Sollwert (22) für das Bereitschaftsteil (14) und/oder der Sollwert (23) für den Wärmeerzeuger (12) erhöht werden, wenn eine Zapfmenge eine Sollwerttemperatur nicht erreicht und die Ist-Leistung und/oder der Sollwert der Sekundärpumpe (18) und/oder des Ventils (18) und/oder des Mischers (21) eine vorgebbare Schwelle überschreiten und/oder auf ihrem Maximalwert arbeiten.

9. Verfahren nach einem der Ansprüche 1 bis 8, **dadurch gekennzeichnet, dass** ein temporärer Sollwert (24), insbesondere eine temporäre Sollwerttemperatur, für das Breitschaftsteil (14) und/oder ein temporärer Sollwert (25), insbesondere eine temporäre Sollwerttemperatur, für den Wärmeerzeuger (12) gespeichert werden.

10. Verfahren nach einem der Ansprüche 1 bis 9, **dadurch gekennzeichnet, dass** ein variabler Sollwert (26), insbesondere eine variable Sollwerttemperatur, für das Bereitschaftsteil (14) und/oder ein variabler Sollwert (27) für den Wärmeerzeuger ermittelt werden, wobei die Höhe des variablen Sollwerts (26, 27) vom Betriebsverhalten der Heizungsanlage (10) abhängt.

11. Verfahren nach Anspruch 10, **dadurch gekennzeichnet, dass** der temporäre Sollwert (24, 25) auf den variablen Sollwert (26, 27) abgesenkt wird, falls eine Zapfmenge eine Sollwerttemperatur erreicht und die Ist-Leistung und/oder der Sollwert der Sekundärpumpe (18) und/oder des Ventils (18) und/oder des Mischers (21) unterhalb einer vorgebbaren Schwelle liegen und/oder ihren Maximalwert nicht erreichen.

12. Verfahren nach einem der Ansprüche 1 bis 11, **dadurch gekennzeichnet, dass** der temporäre Sollwert (24, 25) auf den variablen Sollwert (26, 27) erhöht wird, falls eine Zapfmenge eine Sollwerttemperatur nicht erreicht und die Ist-Leistung und/oder der Sollwert der Sekundärpumpe (18), des Ventils (18) und/oder des Mischers (21) eine vorgebbare Schwelle überschreiten und/oder auf ihrem Maximalwert arbeiten.

13. Verfahren nach einem der Ansprüche 9 bis 12, **dadurch gekennzeichnet, dass** der temporäre Sollwert (24, 25) schrittweise an den variablen Sollwert (26, 27) angepasst wird.

14. Verfahren nach einem der Ansprüche 9 bis 13, **dadurch gekennzeichnet, dass** zu Beginn einer Trinkwarmwasseranforderung der Sollwert (22, 23) als temporärer Sollwert (24, 25) gesetzt wird, welcher im Verlaufe der Trinkwarmwasserzapfung an den variablen Sollwert (26, 27) angepasst wird.

15. Verfahren nach einem der Ansprüche 9 bis 14, **dadurch gekennzeichnet, dass** zu Beginn der Trinkwarmwasseranforderung als temporärer Sollwert (24, 25) der von der vorherigen Trinkwarmwasseranforderung gespeicherte temporäre Sollwert (24, 25) eingesetzt wird.

16. Verfahren nach einem der Ansprüche 9 bis 15, **dadurch gekennzeichnet, dass** eine Erhöhung des temporären Sollwerts (24, 25) auf den variablen Sollwert (26, 27) schneller erfolgt als eine Absenkung.

17. Verfahren nach einem der vorhergehenden Ansprüche, **dadurch gekennzeichnet, dass** der Wärmeerzeuger (12) das Bereitschaftsteil (14) aufheizt, sofern der Istwert des Bereitschaftsteils (14) den Sollwert (22, 23) unterschreitet.

18. Verfahren nach einem der Ansprüche 1 bis 17, **dadurch gekennzeichnet, dass** die Anpassung des Sollwerts (22, 23) über mehrere Zapfungen hinweg vorgenommen und/oder aufgezeichnet wird.

19. Verfahren nach einem der Ansprüche 1 bis 18, **dadurch gekennzeichnet, dass** die Anpassung des Sollwerts (22, 23) aufgrund vergangener, über mehrere Zapfungen hinweg aufgezeichneter angepasster Sollwerte (22, 23) vorgenommen wird.

20. Heizungsanlage mit einem Wärmeerzeuger (12), einem Wärme speichernden Bereitschaftsteil (14) und einer Frischwasserstation (16), die insbesondere nach dem Verfahren nach einem der vorhergehenden Ansprüche betrieben wird, **dadurch gekennzeichnet, dass** die Frischwasserstation (16) und der Wärmeerzeuger (12) elektrisch miteinander verbunden sind und kommunizieren.

21. Steuerung für eine Heizungsanlage nach Anspruch 20, **dadurch gekennzeichnet, dass** in der Steuerung (28) das Verfahren zum Betreiben einer Heizungsanlage (10) nach einem der Ansprüche 1 bis 19 abläuft.
